# EUROPÄISCHE PATENTSCHRIFT

(11) **EP 2 423 893 B1**
(45) Veröffentlichungstag und Bekanntmachung des Hinweises auf die Patenterteilung: **17.04.2013**
(21) Anmeldenummer: 11177539.1
(22) Anmeldetag: 15.08.2011
(51) Int. Cl.: G08B 13/19, G08B 13/196

(54) **Selbsttätig verfahrbares Gerät**
Self-propelled device
Appareil à déplacement automatique

(30) Priorität: 23.08.2010 DE 102010037100
(43) Veröffentlichungstag der Anmeldung: 29.02.2012
(73) Patentinhaber: Vorwerk & Co. Interholding GmbH, 42275 Wuppertal (DE)
(72) Erfinder: Meyer, Frank, 58640 Iserlohn (DE)
(74) Vertreter: Müller, Enno

(56) Entgegenhaltungen:
- EP-A1- 2 194 503
- DE-A1- 10 242 257
- US-A- 5 473 364
- US-A1- 2005 237 189

## Beschreibung

Die Erfindung betrifft ein selbsttätig verfahrbares Gerät nach den Merkmalen des Oberbegriffes des Anspruches 1 und ein Verfahren zur Überwachung eines Raumes nach den Merkmalen des Oberbegriffes des Anspruches 10.

Selbsttätig verfahrbare Geräte der in Rede stehenden Art sind bekannt, so insbesondere in Form von Reinigungs- oder auch Transportgeräten, weiter insbesondere im Haushaltsbereich. Diese Geräte arbeiten im (Reinigungs-) Betrieb bevorzugt ohne Benutzereingriff. Insbesondere zufolge einer Befehlsübermittlung, insbesondere durch den Benutzer, verfährt das Gerät selbsttätig bspw. in einen vorgegebenen Raum, um hiernach bevorzugt selbsttätig entsprechend einer vorgegebenen und einprogrammierten Verfahrstrategie bspw. den Boden abzureinigen. Das Gerät verfährt hierbei weiter bevorzugt unter Zuhilfenahme einer in dem Gerät hinterlegten Kartografie des Gebietes, bspw. einer Wohnung, welche Kartografie selbsttätig bspw. vor einer Erstbenutzung des Gerätes erstellt wird oder alternativ im Zuge einer benutzergeführten Lernfahrt. In der abgelegten Karte sind bevorzugt neben den üblichen Raumbegrenzungen auch Gegenstände, wie insbesondere Schränke oder weitere Möbelstücke verzeichnet. Alternativ oder ergänzend kann das Gerät auch zur selbsttätigen Erstellung einer Kartografie ausgebildet sein. Zur insbesondere selbsttätigen Erstellung der Kartografie, darüber hinaus auch zur Hinderniserkennung im Zuge des üblichen Verfahrens, insbesondere Reinigungsverfahrens des Gerätes, weist dieses zumindest eine Sensorik auf, mittels welcher Hindernisse, weiter Gegenstände im Umfeld des Gerätes, registriert werden können. Diesbezüglich ist es weiter bekannt, Ultraschall- oder auch Infrarot-Abstandsmessungen durchzuführen, wobei durch die im Zuge des üblichen Verfahrens oder auch bei Stillstand des Gerätes ermittelten Abstandswerte unter Zuhilfenahme der bevorzugt abgelegten Kartografie auch eine eindeutige Positionsbestimmung des Gerätes innerhalb der Karte bzw. innerhalb der Wohnung ermöglicht. Die Sensorik ist hierzu zumindest auf das Gebiet in üblicher Verfahrrichtung des Gerätes vor diesem gerichtet. Darüber hinaus sind Lösungen bekannt, bei welchen eine Rundum-Abstandsmessung erfolgt, dies insbesondere zufolge einer um eine Vertikalachse rotierenden Sensorik, weiter bevorzugt unter Nutzung eines rotierenden Triangulationssystems. Auch sind Lösungen bekannt, bei welchen zur Gegenstand- bzw. Hinderniserkennung das Gerät eine elektronische Kamera, bspw. in Form einer Webcam, aufweist. Das aufgenommene Bild wird unmittelbar in dem Gerät analysiert, so weiter insbesondere hinsichtlich im Verfahrweg sich befindlicher, ein weiteres Verfahren in der eingeschlagenen Richtung hindernder Gegenstände.

Bezüglich der erwähnten Ausgestaltung zur Hindernis- und/ oder Stoßerkennung wird beispielsweise auf die DE 103 57 936 A1, DE 10 2008 061 259 A1, DE 10 2008 014 912 A1 und DE 10 2009 023 066 A1 verwiesen. Die erwähnten Ausgestaltungen bezüglich der Orientierung und/ oder des Anlegens einer Kartografie und/ oder bezüglich einer Verfahrstrategie sind bspw. aus der DE 10 2009 041362 A1, DE 10 2009 059 217 A1, DE 10 2010 000 317 A1, DE 10 2010 000174 A1 und DE 10 2010 017 689 A1 bekannt.

Aus der US 2005/237189 A1 ist ein selbsttätig verfahrbares Gerät bekannt, das mit einem einen Menschen erfassenden Sensor ausgerüstet ist. Aus der DE 102 42 257 A1 ist ein selbsttätig verfahrbares Reinigungsgerät bekannt, das allerdings keine Alarmfunktion aufweist. Zum Stand der Technik ist im Übrigen noch auf die EP 2194 503 A1 und die US 5,473,364 A zu verweisen.

Ausgehend von dem genannten Stand der Technik stellt sich der Erfindung die Aufgabe, ein selbsttätig verfahrbares Gerät anzugeben, das vorteilhaft ausgebildet ist, sowie ein Verfahren zum vorteilhaften Nutzen eines solchen selbsttätig verfahrbaren Gerätes anzugeben.

Eine Lösung der Aufgabe ist zunächst beim Gegenstand des Anspruches 1 gegeben, wobei darauf abgestellt ist, dass in dem Gerät eine Kartografie eines Gebietes, bspw. einer Wohnung, hinterlegbar ist, dass eine Rundum-Abstandsmessung mit einer um eine Vertikalachse rotierenden Sensorik vorgesehen ist und dass in vorgegebenen Zeitspanne in einem Vergleich mit einer nicht Alarm auslösenden gespeicherten Kartografie als abweichend (ungewöhnlich) zu bewertende Erfassung als Auslöser für einen bspw. akustischen Alarm nutzbar ist oder zur diesbezüglichen Überprüfung weiterleitbar ist.

Hinsichtlich des Verfahrens ist die Aufgabe durch den Gegenstand des Anspruches 10 gelöst, wobei darauf abgestellt ist, dass in dem Gerät eine Kartografie eines Gebietes, bspw. einer Wohnung, hinterlegt wird, dass eine Rundum-Abstandsmessung mit einer um eine Vertikalachse rotierenden Sensorik vorgenommen wird und dass eine in einer vorgegebenen Zeitspanne in einem Vergleich mit einer nicht Alarm auslösenden gespeicherten Kartografie als abweichend (ungewöhnlich) zu bewertende Erfassung als Auslöser für einen bspw. akustischen Alarm genutzt wird oder zur diesbezüglichen Überprüfung weitergeleitet wird.

Zufolge der vorgeschlagenen Ausgestaltung ist ein im Hinblick auf eine Nutzung der Sensorik günstig auszubildendes selbsttätig verfahrbares Gerät mit einer berührungsfrei und/oder berührend arbeitenden Sensorik zur Erfassung von Gegenständen geschaffen, das ergänzend zu einer oder mehreren möglichen anderen Funktionen oder funktionsmäßig allein als Alarmanlage arbeiten kann. Dies bevorzugt unter Nutzung von ggf. für andere Funktionen ohnehin vorhandenen oder vorgesehenen Einzelfunktionen, insbesondere unter Nutzung der berührungsfreien und/ oder berührend arbeitenden Sensorik zur Erfassung von Gegenständen. Zufolge der vorhandenen Sensorik ist das Gerät in der Lage, innerhalb seines Aktionsraumes die Umgebung zu erfassen. Abstandssensoren können hierbei insbesondere auch im Stillstand des Gerätes bspw. eine Änderung eines Abstandswertes erfassen, was auf eine Änderung des Gegenstandes wie bspw. einen Glasbruch, eine Verlagerung eines Gegenstandes oder auf einen neuen Gegenstand bspw. schließen lässt. Diese Änderung wird über eine vorgesehene Software registriert, die entsprechend ein Alarmsignal generiert.

Die Änderung kann aufgrund innerhalb einer vorgegebenen Zeitspanne von bspw. fünf Minuten oder mehr, bis hin zu einigen Stunden, bspw. vier oder sechs Stunden, zufolge kontinuierlicher Beobachtung von dem Gerät selbst erfasster und gespeicherter Daten erfolgen. Die normale, d.h. nicht Alarm auslösende Umgebung ist in der Kartografie gemappt, wozu entweder die (auch zu Reinigungszwecken) dienende und abgespeicherte Kartografie genutzt wird oder alternativ eine für den bestimmten, vorgegebenen Zeitraum allein dienende aktuelle Kartografie. Mittels der Sensorik, bspw. Ultraschall- oder Infrarotscanner, kann das Gerät Veränderungen, insbesondere temporäre Veränderungen, im Abgleich mit der Kartografie in der Umgebung feststellen. Da das Gerät vorzugsweise mit einer eigenen Energieversorgung, etwa in Form von Akkumulatoren, insbesondere unabhängig von bspw. einem Stromnetz, agieren kann, kann im Hinblick auf die Alarmanlagenfunktion insbesondere auch etwa ein Stromausfall die Aktion des Gerätes nicht behindern.

Insbesondere ist auch bzgl. eines eingangs genannten Gerätes bevorzugt, dass dieses zur Überwachung eines Raumes oder einer Mehrzahl von Räumen eingesetzt wird, wobei dieses Gerät bevorzugt zusätzlich zu der Überwachung auch zur Durchführung von Reinigungsaufgaben, insbesondere im Hinblick auf Böden der genannten Räume, verwendet wird.

Hierdurch ist zunächst eine Durchführung einer Überwachung mittels eines selbsttätig verfahrbaren Gerätes möglich, das gesteuert oder selbstfindend unterschiedliche Orte in einem Raum oder einer Mehrzahl von Räumen aufsuchen kann. Mittels einer berührungsfrei und/ oder berührend arbeitenden Sensorik zur Erfassung von Gegenständen oder Zuständen (bspw. Licht und/ oder Schall) können Überwachungsfunktionen ausgeübt werden. Insbesondere ist bevorzugt, dass das Gerät ein solches ist, das üblicherweise nicht mit der Durchführung von Überwachungsaufgaben, insbesondere auch nicht zur Auslösung eines Alarmes, in Zusammenhang gebracht wird. Dadurch, dass das Gerät in einer bevorzugten Ausführung grundsätzlich und ggf. vorrangig und zunächst, Reinigungsaufgaben durchführt, kann es auch über eine Sensorik verfügen, die im Hinblick auf Überwachungsaufgaben günstig eingesetzt werden kann. Insbesondere kann es aufgrund seiner Bauart, nämlich relativ flach bauend, bevorzugt mit einer Höhe über dem Boden, auf dem es sich bewegt, von nicht mehr als einem halben Meter, bevorzugt im Bereich von 15 cm bis 50 cm, wobei hierbei auch alle Zwischenwerte, auch zur Einengung des genannten Bereichs von oben, in die Offenbarung einbezogen sind, kann es Räumlichkeiten überwachen oder mit Gegenständen vollgestellte Räume durchfahren, die gleichwohl bodennah einen entsprechenden Weg ermöglichen.

Die genannte flachbauende Ausbildung ist auch unabhängig von vorstehendem Zusammenhang für das hier beschriebene Gerät und dessen Verwendung von Bedeutung.

Weitere mögliche Verfahrensschritte, die durchgeführt werden können, sind darin zu sehen, dass die Überwachungs- und Reinigungsaufgaben zeitgleich oder zeitversetzt durchgeführt werden. Es ist auch in dieser Hinsicht eine intermittierende Verfahrensweise möglich, dass also bspw. über einen ersten Zeitabschnitt gereinigt wird, ggf. unter entsprechender Fortbewegung des Gerätes, und in einem zweiten Zeitabschnitt, etwa bei einem Stillstand des Gerätes, oder aber auch bei einem Verfahren des Gerätes, eine Überwachungsaufgabe durchgeführt wird, etc. Darüber hinaus kann von dem Gerät bei Erfassung einer Abweichung von einer vorgegebenen Gegebenheit sogleich oder auch zeitversetzt ein Alarm ausgelöst werden. Weiter ist auch bevorzugt, dass durch das Gerät ein akustischer und/oder optischer Alarm ausgelöst wird und/oder durch das Gerät eine Alarmmeldung drahtlos, bspw. per Funk, an einen Empfänger übermittelt wird. Gerade in diesem Zusammenhang, aber auch grundsätzlich, kann auch vorgesehen sein, dass die Übermittlung des Alarmes derart vorgenommen wird, dass eine solche Aktivität an dem Gerät selbst nicht sichtbar wird. Beispielsweise kann eine stationäre, vorzugsweise tragbare aber an einem bestimmten Ort aufgestellte Signaleinrichtung, die ein akustisches und/oder optisches Signal abgeben kann, in diesbezüglicher Wirkverbindung mit dem Gerät stehen.

In einer vermeintlich von Personen freien Umgebung kann bspw. ein unerwartetes Umherlaufen einer Person, ggf. auch eines Tieres, erkannt werden. "Vermeintlich" kann hier bspw. durch einen vorprogrammierten Zeitraum definiert sein. Eine nicht berechtigte Person wird funktionell als Gegenstand registriert, der in der hinterlegten bzw. zuletzt, bspw. vor Aktivierung der Alarmfunktion, gültigen Kartografie in der Alarmstellung des Gerätes nicht registriert ist. Die Registrierung dieses "neuen" Gegenstandes löst in der Alarmfunktion entsprechend einen Alarm in der angegebenen Weise aus.

Alternativ oder ergänzend kann auch vorgesehen sein, dass eine nicht berechtigte Person dadurch erkannt wird, dass sie bestimmte etwa durch die Sensorik erfassbare Merkmale nicht aufweist. Dies können bspw. bestimmte Reflektionseigenschaften und/oder durch die Sensorik erkennbare Symbole sein. Hierdurch können etwa im Alarmzustand bestimmte Personen den durch das Gerät überwachten Raum gleichwohl ohne Auslösung eines Alarmes betreten.

Darüber hinaus können auch weitere Auffälligkeiten, die zu einer Diskrepanz zur hinterlegten Kartografie führen, einen Alarm auslösen. So ist bevorzugt mittels des Gerätes bspw. die aktuelle Position von Türen und/oder Fenstern, insbesondere bodentiefen Fenstern, mit der Kartografie vergleichbar. Zeigen sich hier Auffälligkeiten, kann dies als Diskrepanz insbesondere zur aktuell ggf. auch insofern hinterlegten Kartografie registriert werden, womit auf ein unbefugtes Eindringen geschlossen werden kann. Entsprechend wird (auch dann) ein Alarm ausgelöst.

Die Erfindung geht weiter gegenständlich auch von einer an sich bekannten Alarmanlage aus, insbesondere einer Alarmanlage zur Innenraumüberwachung, weiter insbesondere eine Infrarot- oder Ultraschallüberwachung, darüber hinaus bevorzugt auch einer Überwachung mittels einer elektronischen Kamera, wie bspw. Webcam, wobei in vorteilhafter Weise eine derartige Alarmanlage in einem selbsttätig verfahrbaren Gerät integriert ist. Entsprechend ist eine an sich bekannte, stationäre Alarmanlage mobilisiert, was die Überwachungsmöglichkeit ausweitet. Im Hinblick auf die weitere noch beschriebene Sensorik, die bspw. zunächst oder auch vorrangig zur Durchführung von Reinigungsfahrten des Gerätes nutzbar ist, kann insbesondere auch vorgesehen sein, dass weitere Sensoren wie etwa zur Erfassung eines Luftdruckes und der Änderung des Luftdruckes und/oder eines Luftzuges an dem Gerät vorgesehen sind und deren erfasste Werte auch zur Überwachung und ggf. Auslösung eines Alarmes nutzbar sind. Hinsichtlich des Luftdruckes kann bspw. eine Änderung des Luftdruckes, wie er durch den Bruch einer Glasscheibe oder das Öffnen einer Tür als Änderung erfassbar ist, von Bedeutung sein. Hinsichtlich des Luftzuges die Änderung in der Luftbewegung in einem Raum, wie es durch das plötzliche Öffnen eines Fensters oder einer Tür sich ergeben kann.

Zufolge der Möglichkeit eines insbesondere selbsttätigen Verfahrens des Gerätes ist dieses in der Lage, auch in der zumindest zeitlich begrenzten Alarmfunktion seinen Standort zu wechseln, so bspw. in regelmäßigen oder auch unregelmäßigen zeitlichen Abständen, weiter bspw. auch in Form einer Patrouillenfahrt insbesondere durch die gesamte Wohnung bzw. durch alle zugänglichen Räume. Eine derartige Patrouillenfahrt kann kontinuierlich erfolgen, alternativ in zeitlich vorbestimmten Abständen, wobei zwischen den Patrouillenfahrten ein Verweilen an einem Ort, weiter bevorzugt im Rahmen des vorgegebenen Zeitraumes an unterschiedlichen Orten bevorzugt ist. Weiter bevorzugt sind die Verweil- und Beobachtungspositionen des Gerätes sowie weiter bevorzugt mögliche Patrouillenfahrten per Zufallssteuerung vorgegeben, folgen entsprechend nicht einem logischen Muster.

In einer weiter bevorzugten Ausgestaltung ist vorgesehen, dass der Alarm in Form der Erzeugung eines akustischen und/oder optischen Signals erfolgt und/oder entsprechende Signale an eine ggf. entfernt und gesondert zu dem Gerät befindliche Informationsverarbeitungseinrichtung weiterleitbar ist. Erst die Informationsverarbeitungseinrichtung, welche die Signale bevorzugt drahtlos erhalten kann, bspw. per Funk oder Wireless Lan, kann dann ggf. erst die Verarbeitung der Signale im Hinblick darauf, ob eine Alarm auslösende Schwelle überschritten ist, durchführen und/oder den Alarm auslösen. Im Falle eines Erfassens eines nicht in der hinterlegten Kartografie registrierten Gegenstandes bzw. im Falle einer Registrierung der Verlagerung eines in der Kartografie hinterlegten Gegenstandes führt dies bevorzugt geräteseitig selbsttätig zum Auslösen des Alarms. Hierzu weist das Gerät einen bevorzugt integrierten oder auch angedockten Signalgeber auf, dies weiter bspw. in Form eines Lautsprechers, zur Ausgabe eines bevorzugt vom Menschen hörbaren Signals. Alternativ oder auch kombinativ hierzu sendet das Gerät im Alarmfall ein optisches Signal, wozu bspw. das Gerät einen Lichtsender, weiter bspw. in Form einer Leuchte wie bspw. einer LED aufweist. Weiter alternativ oder auch kombinativ hierzu leitet das Gerät im Alarmfall die entsprechende Information an eine Verarbeitungseinrichtung, ggf. die schon genannte Informationsverarbeitungseinrichtung, weiter, so weiter bevorzugt an eine bezogen auf das Gerät externe Verarbeitungseinrichtung, welche dann bspw. ein akustisches und/ oder optisches Signal ausgelöst oder abgibt. Auch besteht diesbezüglich die Möglichkeit, dass die (Informations-) Verarbeitungseinrichtung auf einem Display oder dergleichen einen entsprechenden Warnhinweis gibt, weiter bspw. zusammen mit den durch die Sensorik des Gerätes erfassten Koordinaten des Gerätestandpunktes und/oder des erfassten, auffälligen Gegenstandes. Bevorzugt wird zur Datenübertragung im Alarmfall derselbe, bevorzugt drahtlose Kommunikationsweg genutzt, wie im üblichen Betrieb, bspw. Saugbetrieb, zur Befehlsübermittlung und/oder Berichtsübertragung an eine vom Gerät gesonderte Einrichtung.

Die Sensorik, welche grundsätzlich zunächst in einem sonstigen Modus des Gerätes, insbesondere einem Saugmodus, genutzt ist, ist weiter bevorzugt auch außerhalb einer bspw. Reinigungs- oder Lernfahrt, unabhängig von der Saug- und/oder Kehrfunktion aktivierbar, insbesondere zum Zwecke der Ausübung einer Alarmanlagenfunktion, so weiter bevorzugt durch den Benutzer aktivierbar. Alternativ hat das Gerät im Hinblick auf bestimmte, bspw. vorzugsweise frei vorprogrammierbare, Zeiträume, weiter bspw. nachts, eine in dieser Hinsicht aktiviert. Zur manuellen Aktivierung weist das Gerät und/oder dem Gerät zugeordnete Fernbedienungseinheit eine entsprechende Taste bzw. einen Tastencode auf, so dass das Gerät gezielt durch den Benutzer aktiviert und deaktiviert werden kann. Entsprechend ist das Gerät bevorzugt zu Zeiten, in welchen das Gerät nicht zum Zweck der bevorzugten Bodenreinigung bzw. zum Anlegen einer Kartografie verfährt, in Alarmbereitschaft.

Zudem ist bevorzugt eine Basisstation vorgesehen, zu der das Gerät selbsttätig hin findet, wobei an der Basisstation eine Aufladung von Akkumulatoren des Gerätes und/oder eine Entleerung eines Schmutzsammelbehältnisses des Gerätes und/oder eine Weiterleitung von Informationen erfolgt. Die Überwachung bspw. eines Raumes erfolgt in einer Ausgestaltung aus einer Parksituation des Gerätes in der Basisstation heraus. Alternativ oder auch kombinativ hierzu kann das Gerät selbsttätig die Basisstation aufsuchen, bspw. zur Aufladung der Akkumulatoren. Die Basisstation ist bevorzugt auch dazu ausgelegt, Informationen, weiter insbesondere Informationen bzgl. eines Alarms und/oder im üblichen Betrieb, bspw. Reinigungsbetrieb, diesbezügliche Meldungen wie z.B. den Füllgrad eines Schmutzsammelbehälters, zu empfangen und ggf. weiterzuleiten. Die Übermittlung der Informationen zwischen Gerät und Basisstation erfolgt bspw. zufolge Funkübertragung, alternativ zufolge modulierter Lichtübertragung, wobei weiter insbesondere im Falle der Parksituation des Gerätes an der Basisstation auch eine Übertragung über eine elektrische Kupplung erfolgen kann. Die Informationen enthalten in der Alarmfunktion des Gerätes bspw. ein Protokoll einer durchgeführten Patrouillenfahrt, weiter insbesondere Daten und Koordinaten bzgl. auffälliger Gegenstände. Ist das Gerät alternativ oder kombinativ mit einer Webcam oder dergleichen ausgestattet, so ist auch eine Übertragung von Bild- bzw. Filmdateien an die Basisstation möglich. Letztere ist in einer Ausgestaltung ausgelegt zum Abspeichern der übertragenen Informationen, weist entsprechend einen bevorzugt nicht flüchtigen Datenspeicher auf. In weiterer Ausgestaltung ist die Basisstation ausgelegt zur Weiterleitung der Informationen bspw. an den Benutzer, weiter bspw. Wohnungsinhaber, oder an einen Sicherungsdienst, weiter bspw. an die Polizei. Entsprechend ist hierdurch auch eine Fernüberwachung der von dem Gerät zu dem vorgegebenen Zeitraum zu überwachenden Räume gegeben. Auch kann über diesen Informationsweg, insbesondere bei Anordnung einer Webcam, der im Reinigungsbetrieb abzureinigende Raum fernüberwacht werden.

In weiterer Ausgestaltung sendet das Gerät Informationen über WLAN und/ oder Funk, bspw. über das GSM-Netz, und/oder Infrarot, dies ggf. unter Nutzung der Basisstation, alternativ unter Umgehung derselben. So wird bspw. das Gerät als Modul eines hausinternen Computernetzwerkes behandelt, so dass entsprechende Informationen über einen Router kabellos mittels WLAN übertragen werden können. Im Falle einer bspw. GSM-Übertragung sendet das Gerät bevorzugt unmittelbar die Informationen an eine oder mehrere hinterlegte Mobilfunknummern. Darüber hinaus kann über die Informationsstrecke (WLAN, Funk oder Infrarot) zugleich auch eine Fernsteuerung und/oder Fernaktivierung bzw. -deaktivierung des Gerätes erfolgen. Mittels gezielter Fernsteuerung des Gerätes kann dieses in einen vom Benutzer vorbestimmbaren Raum gefahren werden, um hier eine entsprechende Überwachung und/oder bspw. Reinigung durchzuführen. Dies geschieht bevorzugt mittels eines drahtlosen Kommunikationsmoduls, wie ein schnurloses Telefon, ein Mobiltelefon oder Smartphone, wobei weiter insbesondere bei Mobiltelefonen mit einem insbesondere hochauflösbaren Display und einem selbstverfahrbaren Gerät mit einer elektronischen Kamera, bspw. Webcam, das über die Webcam aufgenommene Bild dem Benutzer auf dem Mobiltelefon angezeigt werden kann. Dem Benutzer ist somit die Möglichkeit gegeben, mittels Fernsteuerung des Gerätes bspw. selber festzustellen, ob bestimmte Fenster oder Türen geschlossen sind.

Ist das Gerät mit einem Infrarot-Empfangssensor ausgebildet, bspw. zum Empfang von Signalen einer Infrarot-Fernbedienung zur Aktivierung und/oder Deaktivierung des Gerätes, weiter bspw. zur Fahrsteuerung des Gerätes bei einer Lernfahrt, ist dieses in weiter bevorzugter Ausgestaltung erweiterbar zum Empfang von sichtbarem Licht. So ist bevorzugt im üblichen Betrieb des Gerätes, bspw. Reinigungsbetrieb, der Lichtsensor überdeckt von einer lediglich Infrarotstrahlen durchlässigen Maske. Diese wird bspw. durch den Benutzer im Zuge der Aktivierung der Alarmfunktion entfernt, bspw. aus dem Wirkungsbereich des Lichtsensors geschoben. Entsprechend ist hiernach der Sensor empfänglich für sichtbares Licht, so dass alternativ oder auch kombinativ Alarm ausgelöst wird, wenn bspw. in dem zu bewachenden Raum das Licht eingeschaltet wird und/oder der Strahl einer Taschenlampe erfasst wird. Weiter bevorzugt ist dem Lichtlichtsensor insbesondere in der Alarmfunktion eine Sensorik zugeordnet, welche eine insbesondere plötzliche Helligkeitszunahme erfasst und einen entsprechenden Alarm auslöst.

Weist das Gerät eine Kamera, bspw. eine Webcam auf, so ist diese vorzugsweise ausrichtbar, weiter bevorzugt um eine vertikale Achse des Gerätes schwenkbar, alternativ oder auch kombinativ hierzu um eine Horizontalachse schwenkbar, um so auch höher liegende Bereiche des Raumes zu erfassen. Die jeweilige Verstellung erfolgt in einer Ausgestaltung selbsttätig, bspw. mittels einer im Gerät integrierten Steuerung und/oder manuell durch den Benutzer, insbesondere unter Nutzung eines das Gerät fernsteuerbaren Zusatzgerätes, wie eine Fernbedienung oder ein Mobiltelefon.

Insbesondere im Falle einer insbesondere in Horizontalrichtung nicht dreh- oder verlagerbaren Kamera ist in einer Weiterbildung vorgesehen, dass bei einer bspw. über einen Kartografie-Abgleich festgestellten Auffälligkeit das Gerät selbsttätig bevorzugt auf der Stelle dreht und/ oder zum Ort der Auffälligkeit verfährt, um so den auffälligen Bereich in den Erfassungsbereich der Kamera zu bringen, so dass entsprechend ein Bild oder ein Videostream diesen Bereich betreffend angefertigt werden kann. So ist der Benutzer, insbesondere bei einer Fernübermittlung des Alarms, nicht nur über eine Auffälligkeit im betreffenden Raum informiert, sondern darüber hinaus auch bildlich über die Art der Auffälligkeit.

Zufolge der vorgeschlagenen Lösung wird unter Nutzung bspw. einer Ultraschall-Sensorik und/oder eines Laserscanners und/oder einer Infrarot-Sensorik für den Dockingprozess an die Basisstation bzw. einer Infrarot-Abstandssensorik, weiter bevorzugt unter Nutzung der auch im üblichen Betrieb, bspw. Reinigungsbetrieb genutzten Kommunikation mittels WLAN-Modul und/oder mittels Verbindung zur Hausinstallation bzw. in das Internet, weiter ggf. unter Nutzung der Basisstation mit einem Infrarot-Empfänger und der vorgesehenen Kartierung und Lokalisierung des Gerätes, ein Gerät mit erhöhter Funktionalität geschaffen. In der aktivierten Alarmfunktion können Bewegungen im Raum durch bspw. Personen oder Tiere erfasst, darüber hinaus Veränderungen der Lichtverhältnisse, bspw. bei Einschalten des Raumlichtes oder nach Öffnen eines Fensters oder dergleichen, und darüber hinaus Veränderungen innerhalb der gemappten Kartografie durch Objekte, Personen, Türstellungen usw. festgestellt werden.

Über eine aktive Verbindung bspw. mit dem Internet, weiter bspw. mittels eines WLAN-Moduls kann das Gerät mit seiner Außenwelt in Kontakt treten und ggf. einen Alarm auslösen. Auch kann alternativ oder auch kombinativ der Infrarot-Abstandssensor eine Information per integrierter Sendediode bspw. an die Basisstation senden, welche einen entsprechenden Empfänger aufweist. Auch kann die Basisstation mit zusätzlichen Modulen bspw. über GSM oder Kopplung an das Hausnetz (Hausbus) ebenfalls einen Alarm oder entsprechende Informationen aussenden.

Bevorzugt wird die ungestörte Position des Gerätes nach Aktivierung des Alarmzustandes, bevorzugt zufolge eines Rundum-Scannens, aufgenommen und gespeichert. Nach der Aktivierung der Alarmfunktion, ggf. auch mit Zeitverzug unter Nutzung eines Timers im Gerät, vergleicht letzteres die Ist-Daten mit den Soll-Daten des einen, weiter bevorzugt aller genutzten Sensoren und gibt Alarm beim Überschreiten von zuvor definierten Grenzwerten. In weiter bevorzugter Ausgestaltung kann der Benutzer die sog. Settings mit einer I-Phone- oder Smartphone-Applikation vornehmen.

Bevorzugt ist auch, dass von dem Gerät ein Signal oder ein Alarm im Fall einer Rauchentwicklung auslösbar ist. Insofern kann das Gerät bevorzugt, ggf. zusätzlich zu einem oder mehreren der weiteren beschriebenen Funktionen, aber auch allein, auch im Sinne eines Rauchmelders nutzbar sein. Die Rauchmelderfunktion kann insbesondere durch eine entsprechende Auswertung reflektierter Strahlen, bspw. der Strahlen des Rundum-Scanners, erreicht sein. Eine signifikante Schwächung von reflektierten Strahlen kann als Rauchentwicklung interpretiert werden. Das Gerät kann somit im Überwachungsmodus, der aber auch prinzipiell und nicht nur bezogen auf die hier konkret beschriebene Funktion, zusammen mit dem Reinigungsmodus aktiviert sein kann, aber eben auch, wie angesprochen, alternativ zu dem Reinigungsmodus, wenn das Gerät ein Reinigungsgerät ist, aufgrund von Schwächung zuvor ausgesandter, reflektierter Signale im Hinblick auf einen beispielsweise vorgegebenen Sollwert die Interpretation einer Rauchentwicklung vornehmen. Etwa bei einem dem Gerät grundsätzlich bekannten Raum kann bei unveränderter Laufzeit der Signale eine in allen Blickrichtungen gleiche oder etwa gleiche Schwächung der reflektierten Signale, also etwa gleiche Abnahme der Stärke der reflektierten Signale, als Rauchentwicklung, bevorzugt entsprechend einem vorgegebenen Schwellwert, interpretiert werden und zur Auslösung eines entsprechenden Signals bzw. Alarms dann führen.

Über eine aktive Verbindung via Internet (WLAN-Hausnetz-Internet-I-Phone oder dergleichen) kann der Benutzer die Kartografie bzw. weitere Sensordaten übertragen bekommen und ggf. extern reagieren. Beispielsweise kann er das Gerät auch zur weiteren Kontrolle der Wohnung an eine andere Position schicken. Sofern in oder an dem Gerät zusätzlich eine Kamera integriert ist, kann die Wohnung auch bildlich fernüberwacht werden.

Nachstehend ist die Erfindung anhand der beigefügten Zeichnung, welche lediglich mehrere Ausführungsbeispiele darstellt, näher erläutert. Es zeigt:
- Fig. 1: in perspektivischer Darstellung ein Gerät in Form eines Reinigungsroboters mit vorgesehener Sensorik zur Erfassung von Gegenständen sowie einer Funkantenne zum Senden und/oder Empfangen von Funksignalen;
- Fig. 2: die schematische Darstellung einer in dem Gerät hinterlegten Kartografie eines Raumes;
- Fig. 3: in schematischer Perspektivdarstellung den durch das Gerät überwachten Raum gemäß Fig. 2, bei Erfassen einer Auffälligkeit;
- Fig. 4: eine der Fig. 3 entsprechende Kartografiedarstellung, jedoch nach Erfassen der Auffälligkeit gemäß Fig. 3;
- Fig. 5: ein Gerät gemäß Fig. 1, jedoch ohne Funkantenne, in Zuordnungsstellung zu einer Basisstation.

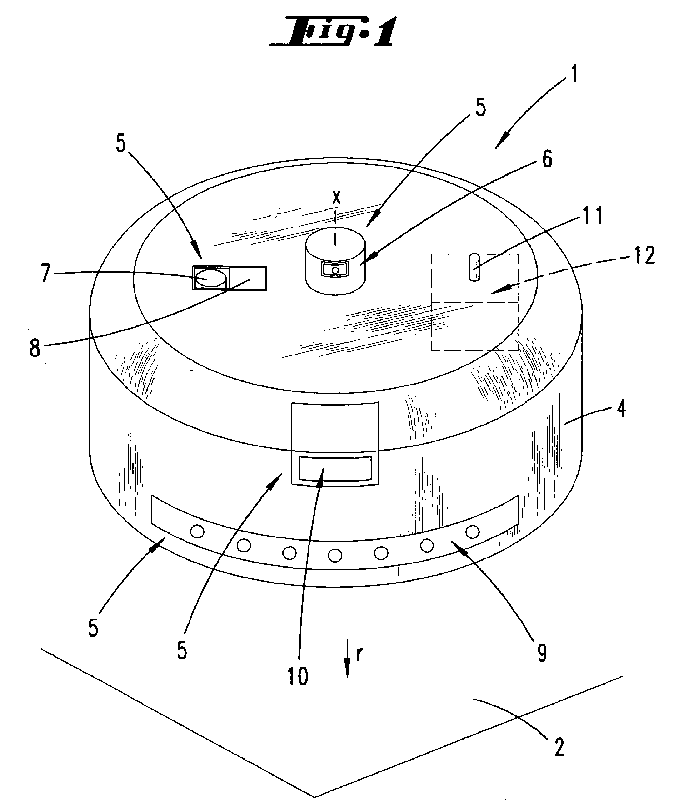

Dargestellt und beschrieben ist zunächst mit Bezug zu Fig. 1 ein Gerät 1 in Form eines Saug- und/oder Kehrgeräts, weiter in Form eines verfahrbaren Haushalts-Bodenreinigungsgerätes. Dieses besitzt ein Chassis, welches unterseitig, dem zu pflegenden Boden 2 zugewandt, elektromotorisch angetriebene Verfahrräder 3 sowie bevorzugt eine über die Unterkante des Chassisbodens hinausragende, gleichfalls elektromotorisch angetriebene Bürste trägt. Das Chassis ist überfangen von einer Gerätehaube 4, wobei das Gerät einen kreisförmigen Grundriss aufweist. Bezüglich der Ausgestaltung des Gerätes 1 als Saug- und/oder Kehrgerät wird auf die DE 102 42 257 A1 verwiesen. Der Inhalt dieser Patentanmeldung wird hiermit vollinhaltlich in die Offenbarung vorliegender Erfindung mit einbezogen, auch zu dem Zweck, Merkmale dieser Patentanmeldung in Ansprüche vorliegender Erfindung mit einzubeziehen.

Weiter kann, wenngleich nicht dargestellt, das Gerät 1 zusätzlich oder auch alternativ zu der Bürste eine Saugmundöffnung aufweisen. In diesem Fall ist in dem Gerät 1 weiter ein Sauggebläsemotor angeordnet, der elektrisch betrieben ist.

Die Elektroversorgung der einzelnen Elektrokomponenten des Gerätes 1, wie für den Elektromotor der Verfahrräder 3, für den Elektroantrieb der Bürste, ggf. für das Sauggebläse und darüber hinaus für die weiter vorgesehene Elektronik in dem Gerät 1 zur Steuerung desselben erfolgt über einen nicht dargestellten, wiederaufladbaren Akkumulator.

Das Gerät 1 ist weiter bevorzugt mit einer Sensorik 5 versehen, so weiter zunächst mit einer Sensoranordnung 6. Diese Sensoranordnung dient insbesondere zur Entfernungsmessung und/oder Kartografierung und/oder Erfassung von Gegenständen durch Strahlenabtastung. Die diesbezügliche Sensorik ist bevorzugt oberseitig der Gerätehaube 4 des Gerätes 1 angeordnet und um eine vertikale Achse x, welche zugleich die Zentralvertikalachse des Gerätes 1 darstellt, drehbar. Die Sensoranordnung 6 besteht bevorzugt aus einem Triangulationssystem.

Bei dem Triangulationssystem handelt es sich um ein optisches System, wobei bevorzugt in einer Ausgestaltung ein Sender in Form einer Lichtquelle, weiter in Form einer LED oder Laserdiode, vorgesehen ist, wobei weiter die Lichtquelle monochromatisches Licht aussendet, so weiter bevorzugt für den Menschen nicht sichtbares Licht, bspw. Infrarotlicht. Weiter weist das Triangulationssystem einem Empfänger auf, dies weiter bevorzugt in Form eines lichtempfindlichen Elements. Hierbei handelt es sich bspw. um ein PSD-Element oder auch um ein CCD- oder CMOS-Element in bevorzugt linienförmiger, d.h. eindimensionaler Bauweise. Weiter bevorzugt ist Bestandteil des Empfängers auch eine Empfängerlinse, die dem lichtempfindlichen Element vorgeschaltet ist.

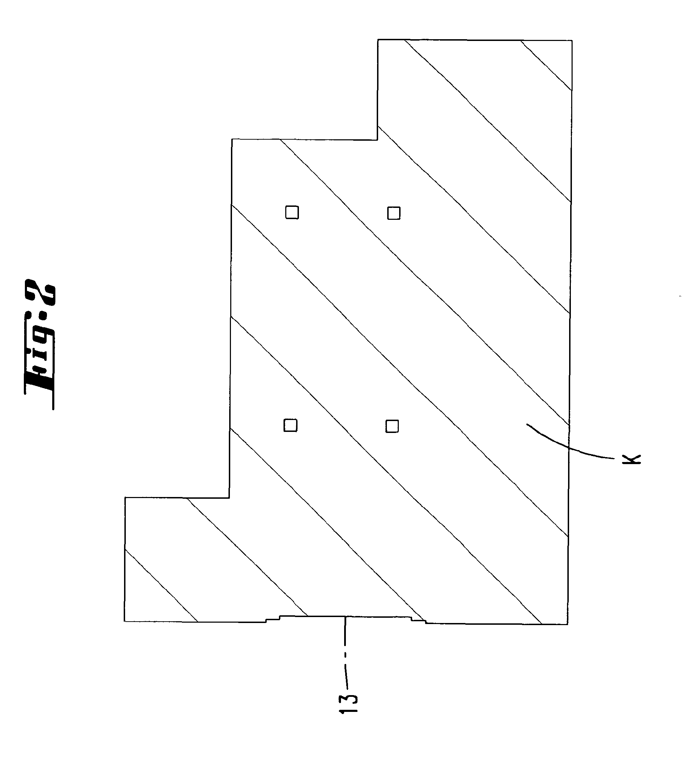

Mit Hilfe der vorbeschriebenen Sensoranordnung 6 ist zunächst eine Hinderniserkennung durchführbar, so dass das Gerät 1 kollisionsfrei sich auf dem Boden 2 bzw. in seiner Umgebung bewegen kann. Darüber hinaus ist, wie weiter bevorzugt, über die Sensoranordnung 6 ein Rundum-Abscannen der Umgebung ermöglicht, wobei die hier ermittelten Entfernungswerte zu Hindernissen und Gegenständen, weiter zu Wänden in der Umgebung zur Erstellung einer Kartografie K genutzt werden (siehe auch Fig. 2), welche Kartografie K in dem Gerät 1 abgespeichert und hinterlegt wird. Die Kartografie K kann darüber hinaus auch alternativ oder ergänzend im Rahmen einer ersten, benutzergeführten Lernfahrt des Gerätes 1 erstellt werden. Zufolge der hinterlegten Kartografie K und eines Scannens der Umgebung bevorzugt mittels der Sensoranordnung 6 ist das Gerät 1 in der Lage, die eigene Position in dessen Umgebung bzw. in der Kartografie K eindeutig zu bestimmen.

Weiter können auch noch darüber hinaus Sensoren, die insbesondere im Hinblick auf eine Alarmfunktion günstig sind, in dem Gerät vorgesehen sein. So etwa ein Luftdruck und/oder ein Luftbewegungs- (Luftzug-) Sensor. Auch kann eine Auswerteeinheit für von ggf. Gegenständen oder Personen mitgeführten Transpondern vorgesehen sein, um etwa in der Alarmfunktion berechtigte von unberechtigten Gegenständen / Personen unterscheiden zu können.

Zur Steuerung des Gerätes 1, bspw. zur Befehlsübermittlung, weiter bspw. zur Aktivierung oder Deaktivierung desselben ist weiter eine Infrarotschnittstelle vorgesehen. Hierzu weist das Gerät 1 im Bereich der Gerätehaube 4 einen lichtempfindlichen Sensor 7 auf. Dieser ist insbesondere in der Reinigungsfunktion des Gerätes 1 bevorzugt überdeckt von einem Filter 8, der lediglich Wellen im Infrarotbereich durchlässt. In dieser Anordnung dient der Sensor 7 zum Empfang von insbesondere über eine Infrarot-Fernbedienung übermittelten Signalen.

Weiter bevorzugt weist das Gerät 1 in üblicher Verfahrrichtung r dem Stirnbereich der Gerätehaube 4 zugeordnet eine Ultraschall-Sensorik 9 auf, über welche insbesondere der unmittelbare Bereich vor dem Gerät 1 in Verfahrrichtung r auf Hindernisse oder dergleichen überwacht wird.

Darüber hinaus ist in dem Gerät 1, weiter bevorzugt in Verfahrrichtung r dem Stirnbereich zugeordnet eine elektronische Kamera 10 in Form bspw. einer Webcam vorgesehen. Über diese ist der in Verfahrrichtung r vor dem Gerät befindliche Bereich der Umgebung erfassbar, so insbesondere im Zuge der Reinigungsfahrt zur Erfassung von Informationen, bspw. Befehlen bzgl. der Abreinigung. Mittels der Kamera 10 können entsprechend bspw. Schilder oder dergleichen erfasst werden, auf welchen Befehle für das Gerät 1 sichtbar hinterlassen sind. Eine entsprechende Auswerteeinheit analysiert das aufgenommene Bild und ermittelt einen ggf. erfassten Befehls-Schriftzug.

Zur Übermittlung von Informationen an das Gerät 1, weiter bevorzugt auch zur Übermittelung von Informationen vom Gerät 1 an einen Empfänger, weist das Gerät 1 alternativ oder, wie bevorzugt, kombinativ zum Lichtsensor 7 eine Funkantenne 11 auf. Diese ist verbunden mit einem geräteinternen Übertragungsmodul, insbesondere mit einem WLAN-Modul 12. Zufolge dieser Ausgestaltung können kabellos Informationen an einen WLAN-Empfänger und/ oder über diesen hinaus ggf. kabelgebunden an einen weiteren Empfänger weitergeleitet werden. Auch können über diese kabellose Verbindung dem Gerät 1 bspw. Reinigungsbefehle, bestimmte Reinigungsabläufe und/oder Kennungen bestimmter, zu reinigender Räume oder dergleichen übermittelt werden.

Die Sensorik 5 des Gerätes 1 (Sensoranordnung 6 und/oder Lichtsensor 7 und/ oder Ultraschall-Sensorik 9 und/oder Kamera 10) des Gerätes 1 wird in vorteilhafter Weise weiter genutzt zur Überwachung der Räumlichkeit. Hierzu wird das Gerät 1 in einen entsprechenden Modus geschaltet, bevorzugt manuell durch den Benutzer, weiter bspw. mittels Fernbedienung über den geräteseitigen Sensor 7 und/oder über die WLAN-Schnittstelle zum Gerät 1.

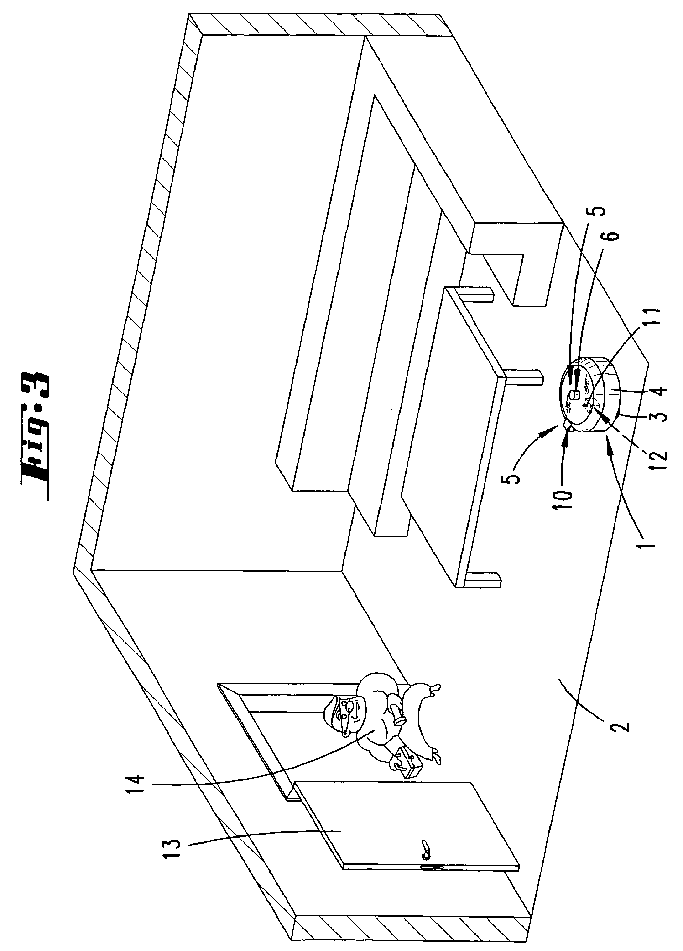

Das Gerät 1 legt nach Aktivierung bevorzugt nach Ablauf einer vorgegebenen Zeit von bspw. einer Minute eine aktuelle Kartografie K insbesondere des Raumes an, in welchem sich das Gerät 1 befindet (vgl. Fig. 2). Hierzu wird in üblicher Weise die Sensoranordnung 6 genutzt, mittels welcher zufolge Rundum-Abscannen die Umgebung erfasst wird. Wie aus der Darstellung in Fig. 2 zu erkennen, ist die Kartografie K angelegt zu einem Zeitpunkt, in welchem die in der Fig. 3 zu erkennende Tür 13 verschlossen ist.

Ein Öffnen der Tür 13 im aktivierten Alarmzustand des Gerätes 1 wird von letzterem erfasst. Zugleich auch eine die Tür 13 durchschreitende Person 14. Die Änderungen der Anordnung eines Gegenstandes (hier der Tür 13) und/oder ein neuer Gegenstand (hier die Person 14) wird durch die Sensorik 5 erfasst, woraufhin entsprechend ein Alarm ausgelöst wird.

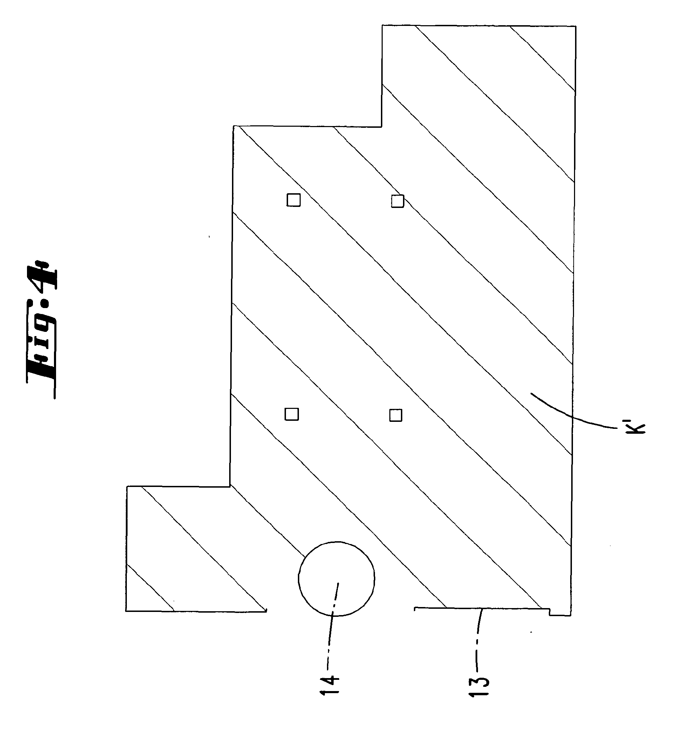

Die Erfassung erfolgt bevorzugt über die rotierende Sensoranordnung 6, mittels welcher in vorbestimmten Zeitabfolgen aktuelle Kartografien K' gemäß Fig. 4 erstellt werden, welche Kartografie K' weiter mit der abgelegten Kartografie K verglichen wird. Änderungen hinsichtlich der Kartografie K' gegenüber der Kartografie K führen zur Auslösung des Alarms.

Darüber hinaus ist auch allein durch die veränderte Abstandsmessung über die Sensoranordnung 6 und/oder über die Ultraschall-Sensorik 9 eine Alarmauslösung durchführbar. Weiter alternativ oder auch kombinativ hierzu wird der Alarm ausgelöst durch eine Änderung des von der Kamera 10 erfassten Bildes.

Auch der Sensor 7 kann zur Überwachung dienen. Hierzu wird der Filter 8 von dem Bediener im Zuge der Aktivierung der Alarmfunktion aus der Zuordnungsstellung zum Sensor 7 verlagert, bspw. schiebeverlagert gemäß der Darstellung in Fig. 1. Hiernach reagiert der Sensor 7 empfindlich auf sichtbares Licht, bspw. Tageslicht oder künstliches Licht, so dass bspw. mit Einschalten der Raumbeleuchtung oder durch eine von der Person 14 gehaltene Taschenlampe ein entsprechendes Signal vom Sensor 7 generiert wird.

Das Gerät 1 ist weiter bevorzugt so ausgelegt, dass der Alarm in der Erzeugung eines akustischen und/oder optischen Signals erfolgt, wozu bspw. das Gerät 1 mit einem Lautsprecher versehen ist, über welchen zum Alarm bspw. ein hochfrequenter Ton erzeugt wird. Der Alarm wird weiter bevorzugt über das geräteinterne WLAN-Modul 12 weitergeleitet, so weiter bspw. zur Anzeige auf der Fernbedienung des Benutzers und/oder zur Anzeige auf einem Computerbildschirm. Das Signal wird über das WLAN-Modul 12 bevorzugt in das Hausnetz übertragen, dies weiter bevorzugt unter Zwischenschaltung eines Routers oder dergleichen, wobei weiter ein entsprechend übertragenes Signal zu einer Weiterleitung an eine externe Informationsverarbeitungseinrichtung erfolgen kann, so bspw. eine Weiterleitung des Alarmsignals an eine Sicherheitsfirma oder an die Polizei.

Dem Gerät 1 ist weiter bevorzugt eine Basisstation 15 zugeordnet. Diese ist in bekannter Weise ausgebildet zur Aufladung der geräteinternen Akkumulatoren, ggf. zur Aufnahme des in dem Gerät 1 innerhalb eines Staubsammelbehälters im Zuge der Reinigungsfahrt gesammelten Staubes und Schmutzes. Das Gerät 1 findet die Basisstation 15 selbsttätig auf, dies bspw. in Abhängigkeit vom Füllgrad des Staubsammelbehälters und/oder vom Ladezustand der Akkumulatoren.

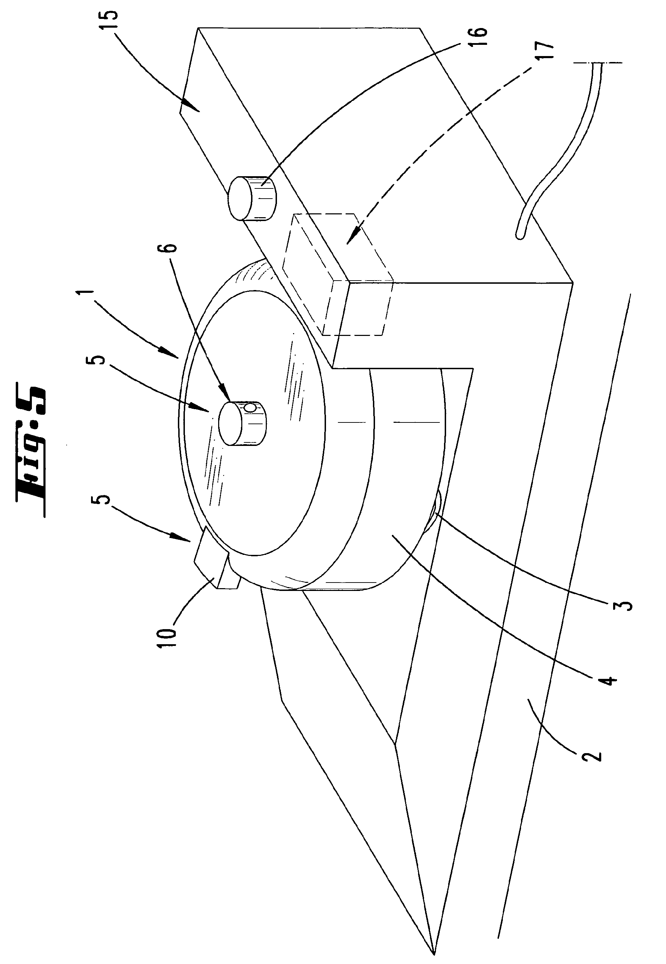

Auch kann die Basisstation 15, wie in Fig. 5 dargestellt, die Parkstellung des Gerätes 1 in der Überwachungssituation sein. Die Übermittlung einer Alarminformation erfolgt hierbei bspw. über eine elektrische Kontaktierung zwischen Gerät 1 und Basisstation 15.

In weiterer, wie auch dargestellter Ausführung folgt die Informationsübermittlung mittels Infrarot, wozu die geräteseitige Sensoranordnung 6 als Lichtquelle genutzt wird. Die Basisstation 15 weist einen entsprechenden Infrarot-Empfänger 16 auf. Die Informationsübertragung kann in der Parksituation gemäß Fig. 5 erfolgen, alternativ jedoch auch in einer beabstandeten Situation, in welcher das Gerät 1 in Sichtweite der Basisstation 15 die Informationen fernübermittelt.

Die Basisstation 15 ist weiter mit einem Modul 17 versehen, welches die empfangenen Informationen bevorzugt per Funk weiterleitet. So ist das Modul 17 bevorzugt als GSM-Modul ausgebildet, weiter bevorzugt beinhaltend eine hinterlegte Mobilfunknummer, so dass mittels dieser die Informationen unmittelbar an das zugeordnete Mobilfunkgerät oder dergleichen übermittelt werden können.

Auch können die empfangenen Informationen über das Modul 17 in das Haushaltsnetz, bspw. Computernetz oder auch Stromnetz, zufolge Modulation geleitet werden, worüber entsprechende Empfänger ggf. nach einer Demodulation die Informationen erhalten.

Weiter alternativ kann ein solches Modul 17, insbesondere ein GSM-Modul, in dem Gerät 1 integriert sein, so dass das Gerät 1 unmittelbar die Informationen an eine Verarbeitungseinrichtung weiterleiten kann.

### Bezugszeichenliste

- 1: Gerät
- 2: Boden
- 3: Verfahrrad
- 4: Gerätehaube
- 5: Sensorik
- 6: Sensoranordnung
- 7: Sensor
- 8: Filter
- 9: Ultraschall-Sensorik
- 10: Kamera
- 11: Funkantenne
- 12: WLAN-Modul
- 13: Tür
- 14: Person
- 15: Basisstation
- 16: Infrarot-Empfänger
- 17: Modul
- r: Verfahrrichtung
- x: Vertikalachse
- K: Kartografie
- K': Kartografie

## Patentansprüche

1. Selbsttätig verfahrbares Gerät (1), insbesondere Reinigungsgerät zur Reinigung eines Bodens (2) wie ein Saug- und/ oder Kehrroboter, mit einer berührungsfrei arbeitenden Sensorik (5) zur Erfassung von Gegenständen, wobei entsprechende Daten in dem Gerät speicherbar sind, **dadurch gekennzeichnet, dass** in dem Gerät eine Kartografie eines Gebietes, bspw. einer Wohnung, hinterlegbar ist, dass eine Rundum-Abstandsmessung mit einer rotierenden Sensorik vorgesehen ist und dass in einer vorgegebenen Zeitspanne in einem Vergleich mit einer nicht Alarm auslösenden gespeicherten Kartografie als abweichend zu bewertende Erfassung als Auslöser für einen bspw. akustischen Alarm nutzbar ist oder zur diesbezüglichen Überprüfung weiterleitbar ist.

2. Selbsttätig verfahrbares Gerät (1) nach Anspruch 1, **dadurch gekennzeichnet, dass** der Alarm in der Erzeugung eines akustischen und/oder optischen Signals erfolgt und/oder an eine Informationsverarbeitungseinrichtung weiterleitbar ist.

3. Selbsttätig verfahrbares Gerät (1) nach Anspruch 1 oder 2, **dadurch gekennzeichnet, dass** das Gerät (1) mittels der Sensorik (5) festgestellte Änderungen in der erfassten Umgebung als Alarm auslösend verarbeitet.

4. Selbsttätig verfahrbares Gerät (1) nach einem der vorhergehenden Ansprüche, **dadurch gekennzeichnet, dass** die Sensorik (5) außerhalb einer Reinigungs- oder Lernfahrt, unabhängig von der Saug- und/oder Kehrfunktion aktivierbar ist.

5. Selbsttätig verfahrbares Gerät (1) nach einem der vorhergehenden Ansprüche, **dadurch gekennzeichnet, dass** eine Basisstation (15) vorgesehen ist, zu der das Gerät (1) selbsttätig hin findet und dass an der Basisstation (15) eine Aufladung von Akkumulatoren des Gerätes (1) und/oder eine Entleerung eines Schmutzsammelbehältnisses des Gerätes (1) und/oder eine Weiterleitung von Informationen erfolgt.

6. Selbsttätig verfahrbares Gerät (1) nach einem der vorhergehenden Ansprüche, **dadurch gekennzeichnet, dass** das Gerät (1) Informationen über WLAN und/oder Funk und/oder Infrarot sendet.

7. Selbsttätig verfahrbares Gerät (1) nach einem der vorhergehenden Ansprüche, **dadurch gekennzeichnet, dass** das Gerät (1) zum Zwecke einer Fernüberwachung eines Raumes durch ein drahtloses Kommunikationsmodul, wie ein schnurloses Telefon, ein Mobiltelefon oder Smartphone fernsteuerbar ist.

8. Selbsttätig verfahrbares Gerät (1) nach einem der vorhergehenden Ansprüche, **dadurch gekennzeichnet, dass** ein in dem Gerät (1) befindliches Empfangsteil (16) einer Infrarot-Fernsteuerung zum Empfang von sichtbarem Licht erweiterbar ist.

9. Selbsttätig verfahrbares Gerät (1) nach einem der vorhergehenden Ansprüche, **dadurch gekennzeichnet, dass** das Gerät (1) eine vorzugsweise ausrichtbare Kamera (10) aufweist.

10. Verfahren zur Überwachung eines Raumes oder einer Mehrzahl von Räumen mittels eines selbsttätig verfahrbaren Gerätes, insbesondere eines Reinigungsgerätes zur Reinigung eines Bodens (2) wie ein Saug- oder Kehrroboter, mit einer berührungsfrei arbeitenden Sensorik (5) zur Erfassung von Gegenständen, wobei mittels dieses Gerätes bevorzugt zusätzlich zu der Überwachung auch Reinigungsaufgaben insbesondere im Hinblick auf Böden der genannten Räume durchgeführt werden, wobei weiter eine Erfassung eines Gegenstandes, ggf. eine hinsichtlich Bewegung oder Form des Gegenstandes, vorgenommen wird, die mit diesbezüglich zu dem Gegenstand gespeicherten Daten verglichen wird und bei einer Bewertung als abweichend als Auslöser für eine bspw. akustischen Alarm genutzt wird oder zur diesbezüglichen Überprüfung weitergeleitet wird, **dadurch gekennzeichnet, dass** in dem Gerät eine Kartografie eines Gebietes, bspw. einer Wohnung, hinterlegt wird, dass eine Rundum-Abstandsmessung mit einer rotierenden Sensorik vorgenommen wird und dass eine in einer vorgegebenen Zeitspanne in einem Vergleich mit einer nicht Alarm auslösenden gespeicherten Kartografie als abweichend zu bewertende Erfassung als Auslöser für einen bspw. akustischen Alarm genutzt wird oder zur diesbezüglichen Überprüfung weitergeleitet wird.

11. Verfahren nach Anspruch 10, **dadurch gekennzeichnet, dass** die Überwachungs- und bevorzugt Reinigungsaufgaben zeitgleich oder zeitversetzt nacheinander durchgeführt werden.

12. Verfahren nach einem der Ansprüche 10 oder 11, **dadurch gekennzeichnet, dass** die Überwachungsaufgaben bei Stillstand des Gerätes oder während des Verfahrens des Gerätes durchgeführt werden.

13. Verfahren nach einem der Ansprüche 10 bis 12, **dadurch gekennzeichnet, dass** von dem Gerät bei Erfassen einer Abweichung von einer vorgegebenen Gegebenheit sogleich oder zeitversetzt ein Alarm ausgelöst wird.

14. Verfahren nach einem der Ansprüche 10 bis 13, **dadurch gekennzeichnet, dass** durch das Gerät ein akustischer und/oder optischer Alarm ausgelöst wird und/ oder durch das Gerät eine Alarmmeldung, vorzugsweise ohne dass an dem Gerät selbst eine solche Aktivität sichtbar wird, drahtlos, bspw. per Funk, an einen Empfänger übermittelt wird.

## Claims

1. Automatically displaceable device (1), in particular a cleaning device for cleaning a floor (2) such as a suction and/or sweeping robot, comprising a non-contact sensor system (5) for detecting objects, wherein corresponding data can be stored in the device, **characterised in that** a map of an area, for example of a home, can be saved in the device, **in that** an all-round distance measurement is provided by means of a rotating sensor system, and **in that** detection to be assessed as deviant, in a preset time period in a comparison with a stored map which does not trigger an alarm, can be used as a trigger for a, for example, acoustic alarm or can be forwarded for checking in this regard.

2. Automatically displaceable device (1) according to claim 1, **characterised in that** the alarm takes place in the production of an acoustic and/or optical signal and/or can be forwarded to an information processing apparatus.

3. Automatically displaceable device (1) according to either claim 1 or claim 2, **characterised in that** the device (1) processes changes in the detected environment which are determined by the sensor system (5) as triggering an alarm.

4. Automatically displaceable device (1) according to any of the preceding claims, **characterised in that** the sensor system (5) can be activated outside a cleaning or test drive independently of the suction and/or sweeping function.

5. Automatically displaceable device (1) according to any of the preceding claims, **characterised in that** a base station (15) is provided, which the device (1) finds automatically, and **in that** charging of accumulators of the device (1) and/or emptying of a dirt collection container of the device (1) and/or forwarding of information takes place at the base station (15).

6. Automatically displaceable device (1) according to any of the preceding claims, **characterised in that** the device (1) transmits information via WLAN and/or radio and/or infrared.

7. Automatically displaceable device (1) according to any of the preceding claims, **characterised in that** the device (1) can be controlled remotely by a wireless communication module, such as a cordless telephone, a mobile telephone or smartphone, for the purpose of remote monitoring.

8. Automatically displaceable device (1) according to any of the preceding claims, **characterised in that** a receiving part (16), located in the device (1), of an infrared remote control can be extended to receive visible light.

9. Automatically displaceable device (1) according to any of the preceding claims, **characterised in that** the device (1) comprises a camera (10) which can preferably be orientated.

10. Method for monitoring a space or a plurality of spaces by means of an automatically displaceable device, in particular a cleaning device for cleaning a floor (2) such as a suction and/or sweeping robot, comprising a non-contact sensor system (5) for detecting objects, wherein cleaning tasks, in particular with regard to floors of said spaces, are also carried out by means of this device, preferably in addition to the monitoring, wherein detection of an object is also undertaken, optionally with regard to a movement or shape of the object, which is compared with data stored about the object in this regard and in an assessment as deviant is used as a trigger for a, for example, acoustic alarm or is forwarded for checking in this regard, **characterised in that** a map of an area, for example of a home, is saved in the device, **in that** an all-round distance measurement is carried out by means of a rotating sensor system, and **in that** a detection to be assessed as deviant in a predetermined time period in a comparison with a stored map which does not trigger an alarm is used as a trigger for a, for example, acoustic alarm or is forwarded for checking in this regard.

11. Method according to claim 10, **characterised in that** the monitoring and preferably cleaning tasks are carried out simultaneously or in succession with a time delay.

12. Method according to either claim 10 or claim 11, **characterised in that** the monitoring tasks are carried out when the device is at a standstill or during displacement of the device.

13. Method according to any of claims 10 to 12, **characterised in that**, upon detection of a deviation from a predetermined condition, an alarm is triggered by the device immediately or with a time delay.

14. Method according to any of claims 10 to 13, **characterised in that** an acoustic and/or optical alarm is triggered by the device and/or an alarm message is transmitted by the device to a receiver in a wireless manner, for example via radio, preferably without such an activity becoming visible at the device itself.

## Revendications

1. Appareil à déplacement automatique (1), en particulier un appareil de nettoyage destiné à nettoyer un sol (2), tel qu'un robot nettoyeur et/ou un robot de balayage, avec un ensemble de capteurs (5) fonctionnant sans contacts destinés à relever des objets, dans lequel des données correspondantes sont susceptibles d'être sauvegardées dans l'appareil, **caractérisé en ce qu'**une cartographie de l'espace, respectivement un appartement, est susceptible d'être déposée dans l'appareil de sorte que l'on puisse prévoir une mensuration de la distance tous azimuts avec un ensemble de capteurs à rotation et que lors d'une relève à évaluer déviante dans un intervalle de temps donné, comparée à une cartographie sauvegardée ne déclenchant pas d'alarme, celle-ci soit susceptible de servir de déclencheur pour une alarme, par exemple acoustique, ou d'être transférée de manière correspondante dans un but de vérification.

2. Appareil à déplacement automatique (1) selon la revendication 1, **caractérisé en ce que** l'alarme résulte de la production d'un signal acoustique et/ou optique et/ou est susceptible d'être transférée à un dispositif de traitement d'informations.

3. Appareil à déplacement automatique (1) selon les revendications 1 ou 2, **caractérisé en ce que** l'appareil (1) traite des changements constatés dans les alentours, saisis à l'aide de l'ensemble de capteurs (5), en tant que déclencheur d'alarme.

4. Appareil à déplacement automatique (1) selon une des revendications précédentes, **caractérisé en ce que** l'ensemble de capteurs (5) est susceptible d'être activé à l'extérieur d'un trajet de nettoyage ou d'étude indépendamment des fonctions de nettoyage et/ou de balayage.

5. Appareil à déplacement automatique (1) selon une des revendications précédentes, **caractérisé en ce que** l'on prévoit une station de base (15) que l'appareil retrouve automatiquement, et qu'au niveau de la station de base (15) a lieu un chargement des accumulateurs de l'appareil (1) et/ou une vidange d'un récipient d'accumulation de saleté de l'appareil (1) et/ou un transfert d'informations.

6. Appareil à déplacement automatique (1) selon une des revendications précédentes, **caractérisé en ce que** l'appareil (1) envoie des informations par WIFI et/ou radiocommunication et/ou infrarouge.

7. Appareil à déplacement automatique (1) selon une des revendications précédentes, **caractérisé en ce que** l'appareil (1) est susceptible d'être télécommandé pour surveiller à distance un local à travers un module de communication sans fil, comme un téléphone sans fil, un téléphone portable ou un téléphone intelligent.

8. Appareil à déplacement automatique (1) selon une des revendications précédentes, **caractérisé en ce qu'**un élément récepteur (16) se trouvant dans l'appareil (1) est susceptible d'être amplifié en une télécommande à infrarouge destinée à saisir toute lumière visible.

9. Appareil à déplacement automatique (1) selon une des revendications précédentes, **caractérisé en ce que** l'appareil (1) présente une caméra (10) pouvant, de préférence, être orientée.

10. Procédé destiné à surveiller un local ou plusieurs locaux à l'aide d'un appareil à déplacement automatique, en particulier un appareil de nettoyage destiné à nettoyer un sol (2), tel qu'un robot nettoyeur et/ou un robot de balayage, présentant un ensemble de capteurs (5) fonctionnant sans contacts destinés à relever des objets, grâce auquel l'on peut effectuer, à l'aide de cet appareil, de préférence des taches de nettoyage plutôt que des taches de surveillance, en particulier au regard des sols des locaux, auquel cas, en outre, une relève d'un objet, s'agissant le cas échéant du mouvement ou forme de l'objet, est effectuée qui est comparée, à cet effet, aux données sauvegardées sur l'objet et qui lors d'une évaluation considérée comme déviante est utilisée comme déclencheur pour une alarme, par exemple acoustique, ou est transférée, à cet effet, dans un but de vérification, **caractérisé en ce qu'**une cartographie de l'espace, respectivement d'un appartement, est susceptible d'être déposée dans l'appareil de sorte que l'on puisse prévoir une mensuration de la distance tous azimuts avec un ensemble de capteurs à rotation et que lors d'une relève à évaluer déviante dans un intervalle de temps donné, comparée à une cartographie sauvegardée ne déclenchant pas d'alarme, celle-ci soit susceptible de servir de déclencheur pour une alarme, par exemple acoustique, ou soit à cet effet susceptible d'être transférée dans une but de vérification.

11. Procédé selon la revendication 10, **caractérisé en ce que** les taches de surveillance et de nettoyage sont effectuées simultanément ou successivement de manière décalée.

12. Procédé selon une des revendications 10 ou 11, **caractérisé en ce que** les taches de surveillance sont exécutées lors de l'arrêt de l'appareil ou pendant le déplacement de l'appareil.

13. Procédé selon une des revendications de 10 à 12, **caractérisé en ce qu'**une alarme est déclenchée, sur le champ ou avec décalage, par l'appareil lors de la saisie d'une déviation par rapport à une valeur donnée.

14. Procédé selon une des revendications de 10 à 13, **caractérisé en ce qu'**une alarme acoustique et/ou optique est déclenchée par l'appareil et/ou qu'un message d'alarme est transmis, sans fil, par exemple par radiocommunication, à un récepteur par l'appareil, de préférence sans qu'une telle activité soit visible sur l'appareil lui-même.
